# EUROPEAN PATENT APPLICATION

(11) **EP 4 606 225 A1**
(43) Date of publication of application: **27.08.2025**
(21) Application number: 23888928.1
(22) Date of filing: 26.09.2023
(51) Int. Cl.: A23L 13/50, A23L 13/70, A23P 20/17, A23L 5/10, A23L 29/00, A23L 27/40, A23L 13/40, A23L 3/36

(54) **DIRECT FIRE GRILLED WHOLE CHICKEN BREAST FOOD AND METHOD FOR MANUFACTURING SAME**

(30) Priority: 07.11.2022 KR 20220147068
(71) Applicant: CJ CheilJedang Corporation, Seoul 04560 (KR)
(72) Inventor: CHOI, Jihun, Seoul 04560 (KR); YOON, Sungyeoul, Seoul 04560 (KR); SONG, Minseok, Seoul 04560 (KR); LEE, Sang Hui, Seoul 04560 (KR); JO, Sung Hoon, Seoul 04560 (KR)
(74) Representative: Meissner Bolte Partnerschaft mbB
(86) International application number: PCT/KR2023/014880
(87) International publication number: WO 2024/101664

(57) **Abstract**

The present disclosure relates to a grilled whole chicken breast food product and a method for producing the same.

## Description

### [Technical Field]

The present disclosure relates to a grilled whole chicken breast food product and a method for producing the same.

### [Background Art]

Chicken breasts contain 1.5 times the protein content and at least 10 times the fat content compared to similar cuts of pork, resulting in a mild flavor. However, due to the dry and firm texture of the meat fibers, chicken breasts are one of the least preferred cuts among the various cuts of chicken.

Chicken breasts are typically consumed by cooking in hot water or steaming. Since such cooking methods do not offer a significantly superior sensory appeal (Kihong, Jeon, et al., Culinary Science & Hospitality Research, 2014, vol.20, no.3, pp.201 - 213), some consumers purchase chicken breasts merely as protein supplements for diet purposes or muscle building, thereby posing limitations in promoting consumption.

Accordingly, chicken breast products have employed various heat treatment processes, such as steaming and oven treatment, to promote chicken breast consumption, but consumer preference still remains low.

Therefore, there is a need to develop various seasonings for a more flavorful and healthier consumption of chicken breasts, as well as to advance the processing technologies, such as shaping, to meet consumer preferences.

### [Disclosure]

### [Technical Problem]

The technical problem of the present disclosure is to provide a method for producing grilled whole chicken breast food products and a grilled whole chicken breast food product produced by the method.

### [Technical Solution]

An object of the present disclosure is to provide a method for producing grilled whole chicken breast food products.

Another object of the present disclosure is to provide a grilled whole chicken breast food product produced by the method of the present disclosure.

### [Advantageous Effects]

The method of the present disclosure can produce whole chicken breast food products with excellent flavor and a soft texture by combining whole chicken breasts with seasonings and heat treating the shaped product in a stepwise manner.

### [Brief Description of the Drawings]

FIG. 1 is a schematic diagram representing the manufacturing process of grilled whole chicken breast food products.
FIG. 2 is a diagram comparing the appearance of whole chicken breasts under different temperature conditions of a first heat treatment. Left: appearance of Preparation Example subjected to a first heat treatment at 110°C; Right: appearance of Comparative Example 4 subjected to a first heat treatment at 150°C.

### [Detailed Description of Preferred Embodiments]

The present disclosure will be described in detail as follows. Meanwhile, each description and embodiment described herein may be applied to other descriptions and embodiments, respectively. That is, all combinations of various elements disclosed in the present disclosure fall within the scope of the present disclosure. Further, the scope of the present disclosure is not limited by the specific description described below. Furthermore, a number of papers and patent documents are referenced and cited throughout this specification. The disclosures of the cited papers and patent documents are incorporated herein by reference in their entirety to further clarify the level of art and the description of the present disclosure.

An aspect of the present disclosure provides a method for producing grilled whole chicken breast food products.

Currently, there are chicken breast products that have employed various heat treatment processes, such as steaming and oven, to promote chicken breast consumption, but due to the dry and firm texture of the meat fibers of chicken breasts, consumer preference still remains low.

The method of the present disclosure can produce whole chicken breast food products with excellent flavor and a soft texture by combining whole chicken breasts with seasoning and heat treating the shaped product in a stepwise manner. Additionally, the method of the present disclosure reduces sodium by adding sea salt instead of conventional refined salt and improves mechanical properties by adding dietary fiber, thereby providing an excellent texture. Further, by adding these supplementary ingredients and performing a three-step process of heat treatment and cooking in an oven, the method of the present disclosure can produce chicken breast food products with enhanced tenderness and moistness.

Specifically, the method of the present disclosure may comprise:
(a) preparing chicken breast, and a brine solution comprising brine and dietary fiber;
(b) mixing the chicken breast and the brine solution by tumbling;
(b) brining the chicken breast mixed with the brine solution;
(d) heat treating the brined chicken breast by a multi-step oven; and
(e) cooling the chicken breast.

In the present disclosure, the chicken breast may be whole chicken breast itself.

In the method of the present disclosure, the step (a) may be mixing chicken breast with a brine solution comprising brine and dietary fiber.

The method of the present disclosure may further comprise washing the chicken breast and removing impurities, bones, *etc.* before the step (a).

The chicken breast may be included in an amount of 75 wt% to 95 wt% based on the total weight of the chicken breast mixed with a brine solution. For example, the chicken breast may be included within a range comprising a lower limit selected from 75 wt% or more, 77 wt% or more, 79 wt% or more, 81 wt% or more, and 83 wt% or more, and/or an upper limit selected from 95 wt% or less, 93 wt% or less, 91 wt% or less, 89 wt% or less, and 87 wt% or less, based on the total weight of the chicken breast mixed with a brine solution.

The brine may comprises sea salt, a phosphate, and sodium bicarbonate.

The brine may comprise sea salt, a phosphate, and sodium bicarbonate in a weight ratio of 1:0.1 to 1:0.1 to 1, 1:0.2 to 0.8:0.2 to 0.8, or 1:0.4 to 0.6:0.4 to 0.6.

The brine may be included in an amount of 0.4 wt% to 1 wt% based on the total weight of the chicken breast mixture. For example, the brine may be included within a range comprising a lower limit selected from 0.4 wt% or more, 0.45 wt% or more, 0.5 wt% or more, and 0.55 wt% or more, and/or an upper limit selected from 1 wt% or less, 0.9 wt% or less, 0.8 wt% or less, and 0.7 wt% or less, based on the total weight of the chicken breast mixture.

The sea salt may comprise 70 wt% or less or less of sodium. For example, the sea salt may include sodium within a range comprising an upper limit selected from 70 wt% or less, 69 wt% or less, 68 wt% or less, 67 wt% or less, 66 wt% or less, and 65 wt% or less based on the total weight of the sea salt.

The dietary fiber may be included in an amount of 0.2 wt% to 0.5 wt% based on the total weight of the chicken breast mixed with a brine solution. For example, the dietary fiber may be included within a range comprising a lower limit selected from 0.2 wt% or more, 0.22 wt% or more, 0.24 wt% or more, 0.26 wt% or more, and 0.28 wt% or more, and/or an upper limit selected from 0.5 wt% or less, 0.48 wt% or less, 0.46 wt% or less, 0.44 wt% or less, and 0.42 wt% or less, based on the total weight of the chicken breast mixed with a brine solution.

The brine solution may further comprise sugar, seasoning, or purified water.

The sugar can be used without limitation as long as the sugar is used in the production of a food product. Examples of the sugar include glucose, xylose, and corn syrup (powder or liquid), but are not limited thereto.

The sugar may be included in an amount of 0.3 wt% to 1.5 wt% based on the total weight of the chicken breast mixed with a brine solution. For example, the sugar may be included within a range comprising a lower limit selected from 0.3 wt% or more, 0.4 wt% or more, 0.5 wt% or more, 0.6 wt% or more, and 0.7 wt% or more, and/or an upper limit selected from 1.5 wt% or less, 1.3 wt% or less, 1.1 wt% or less, 1.0 wt% or less, and 0.9 wt% or less, based on the total weight of the chicken breast mixed with a brine solution.

The seasoning can be used without limitation as long as the seasoning is a commercially available seasoning, and may be, for example, a composite seasoning containing additives such as seasonings and flavoring agents.

The seasoning may be included in an amount of 0.2 wt% to 0.5 wt% based on the total weight of the chicken breast mixed with a brine solution. For example, the seasoning may be included within a range comprising a lower limit selected from 0.2 wt% or more, 0.22 wt% or more, 0.24 wt% or more, 0.26 wt% or more, and 0.28 wt% or more, and/or an upper limit selected from 0.5 wt% or less, 0.48 wt% or less, 0.46 wt% or less, 0.44 wt% or less, and 0.42 wt% or less, based on the total weight of the chicken breast mixed with a brine solution.

The purified water may be included in an amount of 6 wt% to 14 wt% based on the total weight of the chicken breast mixed with a brine solution. For example, the purified water may be included within a range comprising a lower limit selected from 6 wt% or more, 7 wt% or more, 8 wt% or more, and 9 wt% or more, and/or an upper limit selected from 14 wt% or less, 13 wt% or less, 12 wt% or less, and 11 wt% or less, based on the total weight of the chicken breast mixed with a brine solution.

In one embodiment of the present disclosure, the chicken breast mixed with a brine solution may comprise 75 wt% to 95 wt% of chicken breast, 0.4 wt% to 1 wt% of brine, 0.2 wt% to 0.5 wt% of dietary fiber, 0.3 wt% to 1.5 wt% of glucose, 0.2 wt% to 0.5 wt% of seasoning, and 6 wt% to 14 wt% of purified water, based on the total weight of the chicken breast mixed with a brine solution.

In the method of the present disclosure, the step (b) may be mixing the chicken breast with the brine solution of the step (a) by tumbling.

The tumbling may be performed at a rotational speed of 3 rpm to 6 rpm. The tumbling may be performed for 1 hour to 1 hour 30 minutes.

Further, the rotational speed of the tumbling may be within a range comprising a lower limit selected from 3 rpm or more, 4 rpm or more, and 5 rpm or more, and/or an upper limit selected from 6 rpm or less, 5 rpm or less, and 4 rpm or less. Further, the tumbling may be performed for a duration within a range comprising a lower limit selected from 1 hour or more, 1 hour 10 minutes or more, and 1 hour 20 minutes or more, and/or an upper limit selected from 1 hour 30 minutes or less, 1 hour 20 minutes or less, and 1 hour 10 minutes or less.

In the method of the present disclosure, the step (c) may be brining the chicken breast mixture using the brine solution.

The brining may be aging the chicken breast mixed with a brine solution at 2°C to 8°C. The brining may be aging the chicken breast mixed with a brine solution for 12 to 24 hours.

For example, the brining may be performed at a temperature within a range comprising a lower limit selected from 2°C or more, 3°C or more, 4°C or more, and 4.5°C or more, and/or an upper limit selected from 8°C or less, 7°C or less, 6°C or less, and 5.5°C or less. Additionally, the brining may be performed for a duration within a range comprising a lower limit selected from 12 hours or more, 14 hours or more, 15 hours or more, and 16 hours or more, and/or an upper limit selected from 24 hours or less, 22 hours or less, 21 hours or less, and 20 hours or less.

In the method of the present disclosure, the step (d) may be heat treating the brined chicken breast by a multi-step oven heat treatment.

The multi-step oven heat treatment may comprise a first heat treatment in an oven, a second heat treatment in an oven, and a third heat treatment in an oven.

The multi-step oven heat treatment may comprise a first heat treatment in an oven at 90°C to 130°C; a second heat treatment in an oven at 140°C to 180°C; and a third heat treatment in an oven at 130°C to 170°C. The multi-step oven heat treatment may comprise a first heat treatment in an oven for 3 to 7 minutes; a second heat treatment in an oven for 15 to 25 minutes; and a third heat treatment in an oven for 1 to 3 minutes.

The temperature of the first heat treatment in an oven may be within a range comprising a lower limit selected from 90°C or more, 100°C or more, 102°C or more, 104°C or more, 106°C or more, and 108°C or more, and/or an upper limit selected from 130°C or less, 120°C or less, 118°C or less, 116°C or less, 114°C or less, and 112°C or less. Further, the temperature of the first heat treatment in an oven may be within a range comprising a lower limit selected from 3 minute or more, 4 minutes or more, and 5 minutes or more, and/or an upper limit selected from 7 minutes or less, 6 minutes or less, and 5 minutes or less.

By the first heat treatment in an oven, the exterior of the chicken breast mixture can be cooked and set to prevent the internal moisture from escaping.

The temperature of the second heat treatment in an oven may be within a range comprising a lower limit selected from 140°C or more, 150°C or more, 152°C or more, 154°C or more, 156°C or more, and 158°C or more, and/or an upper limit selected from 180°C or less, 170°C or less, 168°C or less, 166°C or less, 164°C or less, and 162°C or less. Further, the temperature of the second heat treatment in an oven may be within a range comprising a lower limit selected from 15 minute or more, 17 minutes or more, and 19 minutes or more, and/or an upper limit selected from 25 minutes or less, 23 minutes or less, and 21 minutes or less.

By the second heat treatment in an oven, the chicken breast mixture can be thoroughly cooked throughout the interior to ensure safety from microorganisms.

The temperature of the third heat treatment in an oven may be within a range comprising a lower limit selected from 130°C or more, 140°C or more, 142°C or more, 144°C or more, 146°C or more, and 148°C or more, and/or an upper limit selected from 170°C or less, 160°C or less, 158°C or less, 156°C or less, 154°C or less, and 152°C or less. Further, the temperature of the third heat treatment in an oven may be within a range comprising a lower limit selected from 1 minute or more, 1.5 minutes or more, and 2 minutes or more, and/or an upper limit selected from 3 minutes or less, 2.5 minutes or less, and 2 minutes or less.

By the third heat treatment in an oven, the outer surface of the chicken breast mixture can be made to have a grilled appearance.

The chicken breast food product produced by the multi-step oven heat treatment , comprising the first to third heat treatments in an oven, may have enhanced tenderness and moistness compared with the chicken breast food products produced by a single-step heat treatment in a common steam oven.

The multi-step oven heat treatment may further comprise grill marking.

The grill marking may be leaving grill marks on the outer surface of the chicken breast mixture by heating to a grill marker and direct flame torching.

By the grill marking, a grilled shape and scent may be added to the outer surface of the chicken breast.

In the method of the present disclosure, the step (e) may be cooling the chicken breast heat treated by a multi-step oven.

Specifically, the cooling may be air cooling and/or rapid freezing.

The cooling may be performed by a method known in the art. For example, the cooling may be cooling at a temperature of -20°C or less for 15 minutes or more, or specifically at a temperature of -20°C to -40°C for 15 to 30 minutes, but is not limited thereto.

The cooling may be cooling such that the core temperature of the chicken breast becomes 20°C or less, but is not limited thereto.

Further, the method of the present disclosure may further comprise sterilizing the cooled chicken breast.

Further, the method of the present disclosure may further comprise packaging the cooled chicken breast.

The chicken breast food product produced by the method of the present disclosure may further comprise supplementary ingredients.

The supplementary ingredients may be, for example, sweeteners, acidity adjusting agents, flavoring agents, refined salts, or stabilizing agents, but are not limited thereto. Additionally, ingredients known to be typically used in producing chicken breast food products may be further included.

The chicken breast food product produced by the method of the present disclosure may comprise 300 mg/100 g or less of sodium. Specifically, the chicken breast product of the present disclosure may comprise sodium within a range comprising an upper limit selected from 290 mg/100 g or less, 280 mg/100 g or less, 270 mg/100 g or less, 265 mg/100 g or less, and 260 mg/100 g or less.

Another object of the present disclosure provides a grilled whole chicken breast food product produced by the method of the present disclosure.

The grilled whole chicken breast food product is as described above.

### [Mode for Carrying Out the Invention]

The present disclosure will be described in detail by way of Examples. However, these Examples are given for illustrative purposes only, and the scope of the invention is not intended to be limited by these Examples. Meanwhile, the technical descriptions absent in the present disclosure may be sufficiently understood and readily practiced by a person of ordinary skill in the art of the present disclosure or related art.

### Preparation Examples and Comparative Examples

### Preparation Example: Preparation of grilled whole chicken breast food product

The chicken breast and supplementary ingredients were prepared by weighing them as follows: 85 wt% of chicken breast, 0.6 wt% of brine (sea salt:phosphate:sodium bicarbonate = 2:1:1 (w/w)), 0.8 wt% of glucose, 0.3 wt% of composite seasoning (containing garlic, onion, and ginger), 0.3 wt% of dietary fiber (Vitacel, Sewoo I&C), and 10 wt% of purified water. The sea salt comprised sodium and potassium in a ratio of 65:35 (w/w). Phosphate was first added to purified water and mixed. Subsequently, sea salt, sodium bicarbonate, glucose, and composite seasoning were added to the solution, which was mixed until no particles were visible. Finally, dietary fiber was added and mixed to prepare the brine solution.

Impurities, bones, *etc.* were removed from the refrigerated chicken breast.

The chicken breast and brine solution were placed into a vacuum tumbler (MA-500 PS, NOWICKI, Poland) and tumbled at a rotational speed of 3 rpm to 6 rpm for 1 hour to 1 hour and 30 minutes to ensure even penetration of the brine solution into the chicken breast.

The tumbled chicken breast was subjected to brining by aging at 5°C for 12 to 24 hours.

The brined chicken breast was arranged on the chain of a continuous oven without overlapping for heat treatment and cooking. The brined chicken breast was subjected to a first heat treatment in an oven (GSO(MPO)-5072JT, HI-COOK, Japan) at 110°C for 5 minutes to cook and set the exterior of the chicken breast, thereby preventing the internal moisture from escaping. Subsequently, the chicken breast was subjected a second heat treatment in an oven (Pegasus 60, HI-COOK, Japan) at 160°C for 20 minutes such that the chicken breast is thoroughly cooked. Then, the chicken breast was subjected to a third heat treatment in an oven (BSCE-570X, HI-COOK, Japan) at 150°C for 2 minutes to create an appearance resembling a grilled surface on the exterior using superheated steam. Finally, the chicken breast was passed through a grill marker (Grill-marker, HI-COOK, Japan) with direct flame torching to leave grilled marks on the surface through direct flame torching, thereby adding grill marks and a grilled aroma.

The heat treated and cooked chicken breast was thoroughly frozen at -20°C to -40°C for 15 to 30 minutes and then air-cooled to ensure that the core temperature reached 20°C or less.

The air-cooled chicken breast was vacuum-packed, passed through an X-ray machine and a metal detector, and then sterilized using a spray-type sterilizer (Hyupjin, Korea).

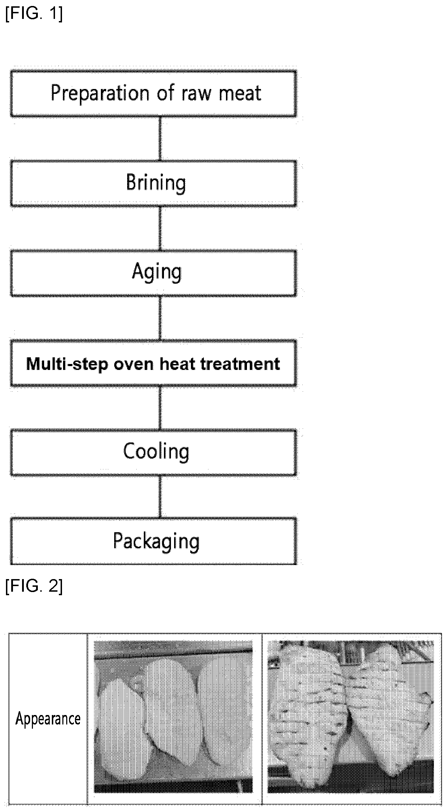

A schematic diagram representing the manufacturing process of the Preparation Example is shown in FIG. 1.

### Comparative Example 1: Preparation of product comprising purified water and excluding sodium bicarbonate

A grilled whole chicken breast food product was prepared in the same manner as in Preparation Example, except that conventional refined salt was added in the same amount instead of sea salt, and sodium bicarbonate was excluded.

### Comparative Example 2: Preparation of product comprising animal collagen

A grilled whole chicken breast food product was prepared in the same manner as in Preparation Example, except that among the supplementary ingredients, conventional animal collagen (auxiliary protein) was added in the same amount instead of dietary fiber.

### Comparative Example 3: Preparation of product with heat treatment in a common steam oven

A grilled whole chicken breast food product was prepared in the same manner as in Preparation Example, except that a single-step process of heat treatment and cooking was performed in a common steam oven at 100°C for 27 minutes.

### Comparative Example 4: Preparation of product heat treated at high temperature

A grilled whole chicken breast food product was prepared in the same manner as in Preparation Example, except that the first heat treatment was performed at 150°C for 5 minutes.

### Experimental Examples

### Experimental Example 1: Comparison of sodium content and sensory appeal with product comprising purified refined salt and excluding sodium bicarbonate

The sodium content of Preparation Example, comprising brine (sea salt, phosphate, and sodium bicarbonate), and Comparative Example 1, comprising refined salt and sodium bicarbonate, were measured and compared using the Food Code General Test Method 2.2.1.6.

The sensory appeal analysis was conducted with 10 trained researchers, who assessed the samples based on appearance, tenderness, moistness, and overall preference using a 5-point scale (5: very good, 4: good, 3: average, 2: poor, 1: very poor).

As a result, Preparation Example 1, comprising brine (sea salt, phosphate, and sodium bicarbonate), had lower sodium content than Comparison Example 1, comprising refined salt and sodium bicarbonate, as shown in Table 1 below.

Further, the sensory appeal analysis showed that Preparation Example 1 had superior tenderness and moistness compared with Comparative Example 1.

Accordingly, it was found that adding sea salt, phosphate, and sodium bicarbonate as brine when preparing grilled chicken breast food product results in a lower sodium content and increase in moistness, thereby increasing sensory appeal.

**[Table 1]**

| | Sodium (mg/100g) | Sensory Appeal Analysis | | | |
|---|---|---|---|---|---|
| | | Appearance | Tenderness | Moistness | Overall Preference |
| Preparation Example | 259.29 | 3.86±0.57 | 3.82±0.42 | 3.90±0.38 | 3.86±0.41 |
| Comparative Example 1 | 354.24 | 3.85±0.46 | 3.80±0.48 | 3.82±0.34 | 3.83±0.46 |

### Experimental Example 2: Comparison of properties and sensory appeal with product comprising animal collagen

The mechanical properties, including hardness (kg), springiness, gumminess (kg), and chewiness (kg), of Preparation Example, prepared using dietary fiber, and Comparative Example 2, prepared using animal collagen, were analyzed using a texture analyzer (TA-XT2i, Stable Micro Systems Ltd., Surrey, England).

As a result, Preparation Example prepared using dietary fiber had lower hardness, springiness, gumminess, and chewiness compared with Comparative Example 2, prepared using animal collagen, as shown in Table 2 below.

**[Table 2]**

| | Hardness (kg) | Springiness | Gumminess (kg) | Chewiness (kg) |
|---|---|---|---|---|
| Preparation Example | 12.89±1.14 | 0.47±0.05 | 4.81±0.58 | 2.29±0.37 |
| Comparative Example 2 | 13.61±1.39 | 0.51±0.04 | 4.83±0.60 | 2.46±0.38 |

The sensory appeal analysis was conducted with 10 trained researchers, who assessed the samples based on appearance, tenderness, moistness, and overall preference using a 5-point scale.

As a result, Preparation Example 2 exhibited superior tenderness and moistness compared with Comparative Example 2, as shown in Table 3 below.

Accordingly, it was found that adding dietary fiber instead of animal collagen when preparing grilled chicken breast food product results in reduced chewiness and thereby a soft texture, as well as enhanced moistness, improving overall preference.

**[Table 3]**

| | Appearance | Tenderness | Moistness | Overall Preference |
|---|---|---|---|---|
| Preparation Example | 3.85±0.38 | 3.92±0.41 | 3.89±0.45 | 3.90±0.38 |
| Comparative Example 2 | 3.84±0.35 | 3.78±0.43 | 3.58±0.40 | 3.71±0.41 |

### Experimental Example 3: Comparison of properties and sensory appeal with product heat treated in a common steam oven

The mechanical properties, including hardness (kg), springiness, gumminess (kg), and chewiness (kg), of Preparation Example, prepared using a three-step process of heat treatment and cooking in an oven, and Comparative Example 3, prepared using a single-step process of heat treatment and cooking at 100°C for 27 minutes in a common steam oven, were analyzed using a texture analyzer.

As a result, Preparation Example, prepared using a three-step process of heat treatment and cooking in an oven, exhibited lower hardness and gumminess compared with Comparative Example 3, prepared using a single-step process of heat treatment and cooking in a common steam oven at 100°C for 27 minutes, as shown in Table 4 below.

**[Table 4]**

| | Hardness (kg) | Springiness | Gumminess (kg) | Chewiness (kg) |
|---|---|---|---|---|
| Preparation Example | 5.14±0.45 | 0.75±0.05 | 1.83±0.14 | 1.36±0.20 |
| Comparative Example 3 | 5.27±0.41 | 0.61±0.07 | 2.12±0.25 | 1.29±0.15 |

The sensory appeal analysis was conducted with 10 trained researchers, who assessed the samples based on appearance, tenderness, moistness, and overall preference using a 5-point scale.

As a result, Preparation Example exhibited superior tenderness and moistness compared with Comparative Example 3, as shown in Table 5 below.

Accordingly, it was found that performing a three-step process of heat treatment and cooking in an oven to produce grilled whole chicken breast food product results in enhanced hardness and gumminess and thereby a soft texture, as well as enhanced preference of appearance, increasing overall preference.

**[Table 5]**

| | Appearance | Tenderness | Moistness | Overall Preference |
|---|---|---|---|---|
| Preparation Example | 3.83±0.31 | 4.07±0.38 | 4.03±0.39 | 4.04±0.35 |
| Comparative Example 3 | 3.68±0.30 | 3.81 ±0.27 | 3.80±0.23 | 3.57±0.31 |

### Experimental Example 4: Comparison of sensory appeal with product heat treated at high temperature

A sensory appeal analysis was performed on Preparation Example, prepared by the first heat treatment at 110°C for 5 minutes, and Comparative Example 4, prepared by the first heat treatment at 150°C for 5 minutes.

The sensory appeal analysis was conducted with 80 general consumers, who assessed the samples based on appearance, tenderness, moistness, and overall preference using a 5-point scale.

As a result, it was found that when the temperature of the first heat treatment exceeds 120°C, the chicken breast adheres onto the oven chain and burns, as shown in FIG. 2. This phenomenon occurs because chicken breast has a low fat content; when the surface is exposed to high heat, moisture evaporates, and the dried meat adheres to the chain and is exposed to continuous heating, resulting in the formation of charred residues. The charred residues may remain in the final product after the manufacturing process, lowering product quality and potentially having adverse effects on health when consumed. Therefore, it is found that it is preferrable for the temperature of the first heat treatment not to exceed 120°C.

Accordingly, it was confirmed that a temperature of 120°C or less, preferably between 100°C and 110°C, is appropriate as the temperature of the first heat treatment for the production of grilled whole chicken breast food products in order to prevent the formation of charred residues while sufficiently cooking and setting the exterior and thereby prevent internal moisture from escaping.

Additionally, the grilled whole chicken breast food product produced according to method of the present disclosure has reduced sodium by the addition of sea salt instead of refined salt and improved mechanical properties by the addition of dietary fiber, thereby providing an excellent texture. Further, by adding the supplementary ingredients and performing a three-step process of heat treatment and cooking in an oven, the method of the present disclosure can produce chicken breast products with enhanced tenderness and moistness.

As set forth above, a person skilled in the art will be able to understand that the present disclosure may be embodied in other specific forms without departing from the technical spirit or essential characteristics thereof. Therefore, the embodiments described above should be construed as being exemplified and not limiting the present disclosure. It should be understood that all changes or modifications derived from the definitions and the scopes of the claims and their equivalents fall within the scope of the present disclosure.

## Claims

1. A method for producing a grilled whole chicken breast food product, comprising:
(a) preparing chicken breast, and a brine solution comprising brine and dietary fiber;
(b) mixing the chicken breast and the brine solution by tumbling;
(c) brining the chicken breast mixed with the brine solution;
(d) heat treating the brined chicken breast by a multi-step oven heat treatment; and
(e) cooling the chicken breast.

2. The method of claim 1, wherein the brine comprises sea salt, a phosphate, and sodium bicarbonate.

3. The method of claim 2, wherein the sea salt, phosphate, and sodium bicarbonate are comprised in a weight ratio of 1 : 0.4 to 0.6 : 0.4 to 0.6.

4. The method of claim 1, wherein the brine is included in an amount of 0.4 wt% to 1 wt% based on the total weight of the chicken breast mixed with a brine solution.

5. The method of claim 2, wherein the sea salt comprises 70 wt% or less of sodium.

6. The method of claim 1, wherein the dietary fiber is included in an amount of 0.2 wt% to 0.5 wt% based on the total weight of the chicken breast mixed with the brine solution.

7. The method of claim 1, wherein the brine solution further comprises sugar, seasoning, or purified water.

8. The method of claim 1, wherein the tumbling is performed at a rotational speed of 3 rpm to 6 rpm for 1 hour to 1 hour and 30 minutes.

9. The method of claim 1, wherein the brining is performed at 2°C to 8°C for 12 to 24 hours.

10. The method of claim 1, wherein the multi-step oven heat treatment comprises a first heat treatment in an oven at 90°C to 130°C for 3 to 7 minutes; a second heat treatment in an oven at 140°C to 180°C for 15 to 25 minutes; and a third heat treatment in an oven at 130°C to 170°C for 1 to 3 minutes.

11. The method of claim 1, wherein the multi-step oven heat treatment further comprises grill marking.

12. The method of claim 1, wherein the cooling is performed at -40°C to -20°C for 15 to 30 minutes.

13. The method of claim 1, wherein the method further comprises sterilization.

14. The method of claim 1, wherein the manufactured chicken breast food product comprises 300 mg/100 g or less of sodium.

15. A grilled whole chicken breast food product produced by any one method of claims 1 to 14.
